# EUROPEAN PATENT SPECIFICATION

(11) **EP 2 988 466 B1**
(45) Date of publication and mention of the grant of the patent: **24.05.2017**
(21) Application number: 14306282.6
(22) Date of filing: 18.08.2014
(51) Int. Cl.: H04L 29/08, H04L 29/06

(54) **METHODS AND DEVICES FOR TRANSMISSION OF MEDIA CONTENT**
VERFAHREN UND VORRICHTUNGEN ZUR ÜBERTRAGUNG VON MEDIENINHALT
PROCÉDÉS ET DISPOSITIFS POUR LA TRANSMISSION D'UN CONTENU MULTIMÉDIA

(43) Date of publication of application: 24.02.2016
(73) Proprietor: ALCATEL LUCENT, 92100 Boulogne-Billancourt (FR)
(72) Inventor: De Vleeschauwer, Danny, 2018 Antwerpen (BE)
(74) Representative: ALU Antw Patent Attorneys

(56) References cited:
- EP-A1- 2 469 774
- US-A1- 2013 227 158

## Description

### FIELD OF THE INVENTION

The present invention relates to the field of telecommunications. In particular, the present invention relates to methods and devices for transmission of media content.

### BACKGROUND

Dynamic Adaptive Streaming over HTTP (DASH) is a streaming technique for media content, wherein the media content is encoded in various qualities (referred to as "representations"), and each representation is divided in segments. The segments are individually addressable by specific URLs. A typical DASH client estimates the available network throughput based on how fast the segments it requested in the past arrived and requests the next segment of a representation whose bit rate just fits this measured throughput. A DASH client requests segments via HTTP GET requests (with the correct URL) over a TCP (transport control protocol) connection. The server interprets the URL and sends the corresponding byte string to the client in the HTTP response.

This way of requesting segments leads to an "on-off" behavior: 1) the client has to wait for the response to arrive before it can issue the next requests (because it needs to make a throughput estimation) and 2) sometimes the DASH client voluntary leaves larger gaps because the representation with the higher bit rate than the one that is currently downloaded does not fit the measured throughput while the client wants to avoid that the play-out buffer increases to a too large value. This on-off behavior is artificial as video has essentially a streaming character and introduces the following problems:
1) The idle time between the issuing of a HTTP GET request and the arrival of the first packet of the video segment is essentially a wasted transport opportunity. The fundamental reason for this gap is that the DASH client measures the throughput on the HTTP level, i.e., as the ratio of the segment size (in byte) and the download time, which is equal to the difference between the time the last packet of the segment arrived and the time the HTTP GET request was issued.
2) The (larger) voluntarily gaps between consecutive HTTP GET requests (on top of the gaps under 1) may confuse TCP, which may go in slow start phase.
3) Since the DASH client only senses the network when it has information to receive (i.e., during the on-periods) and is ignorant about what happens during the gaps (i.e., during the off-periods), it can measure a very inaccurate value for the estimated throughput.

Various techniques to reduce the detrimental effect of these gaps have been proposed.
1) Pipelining HTTP GET requests. Consecutive segments of a representation are requested at the same time (but still in multiple HTTP GET requests) such that fewer (small) gaps result. This essentially boils down to using larger video intervals and results in an algorithm that is less able to follow throughput fluctuations. This technique can only solve problems associated with small gaps.
2) Solutions that tweak TCP and make it less prone to the gaps the DASH client leaves. In existing implementations of TCP the value of congestion window (cwnd) after a gap is either too large (because congestion levels have changed during the gap or because at the beginning of a new segment download TCP sends a burst of information in the network equal to cwnd and the buffers cannot absorb this burst) or too small (because the TCP time-out timer expired). Although these TCP tweaks help a bit in some circumstances, it is difficult to design a method that is beneficial in all circumstances (e.g., for video and data sources).
3) Solutions in the network under the form of shapers. These shapers can decrease the large gaps between consecutive downloads of segments, but they also have an impact on the throughput that the DASH client observes and in turn this may lead to this client being less inclined (than in case without a shaper) to choose a representation with a higher video bit rate for the next video segment. Moreover, for these techniques to work properly the shaper needs to be aware of the client choices (to shape at an adequate bit rate).

EP2469774 and US2013/227158 describe example of DASH clients.

### SUMMARY

It is thus an object of embodiments of the present invention to propose a method and a device for transmission of media content, which do not show the inherent shortcomings of the prior art.

Accordingly, embodiments relate to a method for transmission of media content from a server to a client device, executed by the client device, wherein the server is capable of streaming the media content in a plurality of representations having different mean bit rates and of starting the streaming of a representation at a plurality of switching times for said representation, the method comprising:
- obtaining media description data representative of the number of available representations, the ratios between the mean bit rates of the representations and switching times for the representations,
- while receiving streaming media content in a current representation, storing the received representation in a buffer and playing the buffered representation:
   - determining a sample comprising a sampling time and the amount of data in the buffer at the sampling time, and storing the N last samples,
   - determining, in function of said N last samples, a completion time wherein the client device will have received streaming media content for the current representation up to a future switching time,
   - in response to reaching said completion time:
      - for the current representation and at least one other representation associated with said future switching time, determining a prediction of the evolution of the amount of data in the buffer in function of the N last samples and said ratios,
      - selecting a representation in function of said predictions, and
      - if the selected representation is different from the current representation, sending at least one message to the server for stopping transmission of the current representation and starting transmission of the selected representation from said switching time.

Correspondingly, embodiments relate to a client device for transmission of media content from a server to said client device, wherein the server is capable of streaming the media content in a plurality of representations having different mean bit rates and of starting the streaming of a representation at a plurality of switching times for said representation, the client device comprising a control module configured for:
- obtaining media description data representative of the number of available representations, the ratios between the mean bit rates of the representations and switching times for the representations,
- while receiving streaming media content in a current representation, storing the received representation in a buffer and playing the buffered representation:
   - determining a sample comprising a sampling time and the amount of data in the buffer at the sampling time, and storing the N last samples,
   - determining, in function of said N last samples, a completion time wherein the client device will have received streaming media content for the current representation up to a future switching time,
   - in response to reaching said completion time:
      - for the current representation and at least one other representation associated with said future switching time, determining a prediction of the evolution of the amount of data in the buffer in function of the N last samples and said ratios,
      - selecting a representation in function of said predictions, and
      - if the selected representation is different from the current representation, sending at least one message to the server for stopping transmission of the current representation and starting transmission of the selected representation from said switching time.

In an embodiment, determining said completion time comprises:
- determining a slope of the amount of data in the buffer over time, in function of said N last samples, and
- determining said completion time in function of said slope.

Determining a prediction of the evolution of the amount of data in the buffer for another representation may comprise determining a new slope for the other representation in function of the slope for the current representation and the ratio between the mean bit rates for the current representation and the other representation.

In an embodiment, samples are determined for respective decoded frame of the media content.

The method may comprise:
- sending an HTTP GET request to the server, specifying the current representation and a first switching time for the current representation, and
- wherein sending at least one message to the server for stopping transmission of the current representation and starting transmission of the selected representation from said switching time comprises:
   - sending an RST packet to the server for stopping transmission of the current representation, and
   - sending an HTTP GET request to the server specifying the selected representation and the switching time for the selected representation.

The method may comprise:
- setting up a web socket for communication between the client device and the server, and
- wherein sending at least one message to the server for stopping transmission of the current representation and starting transmission of the selected representation from said switching time comprises sending a unique request over the web socket, specifying the selected representation and the switching time for said selected representation.

Other embodiments relate to a method for transmission of media content from a server to a client device, executed by the server, wherein the server is capable of streaming the media content in a plurality of representations having different mean bit rates and of starting the streaming a representation at a plurality of switching times for said representation, the method comprising:
- setting up a web socket for communication between the client device and the server,
- in response to a request received over the web socket, specifying a selected representation and a switching time for the selected representation:
   - stopping transmission of a current representation, and
   - starting transmission of the selected representation from said switching time.

Correspondingly, embodiments relate to a server for transmission of media content to a client device, capable of streaming the media content in a plurality of representations having different mean bit rates and of starting the streaming a representation at a plurality of switching times for said representation, comprising a streaming module configured for:
- setting up a web socket for communication between the client device and the server,
- in response to a request received over the web socket, specifying a selected representation and a switching time for the selected representation:
   - stopping transmission of a current representation, and
   - starting transmission of the selected representation from said switching time.

Embodiments also relate to a computer program comprising instructions for performing one of the methods mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a functional view of a system for transmission of media content,
Figure 2 is a flowchart of a method for transmission of media content executed by the client device of the system of Figure 1,
Figure 3 is a graph showing the predicted evolutions of the amount of data in the buffer of the client device,
Figures 4 and 5 are flowcharts of two example methods for transmission of media content executed by the server of the system of Figure 1,
Figure 6 is a timeline showing reception of streaming media content by the client device of the system of Figure 1, and
Figure 7 is a structural view of a transmission device, which may be the server or the client device of Figure 1.

### DESCRIPTION OF EMBODIMENTS

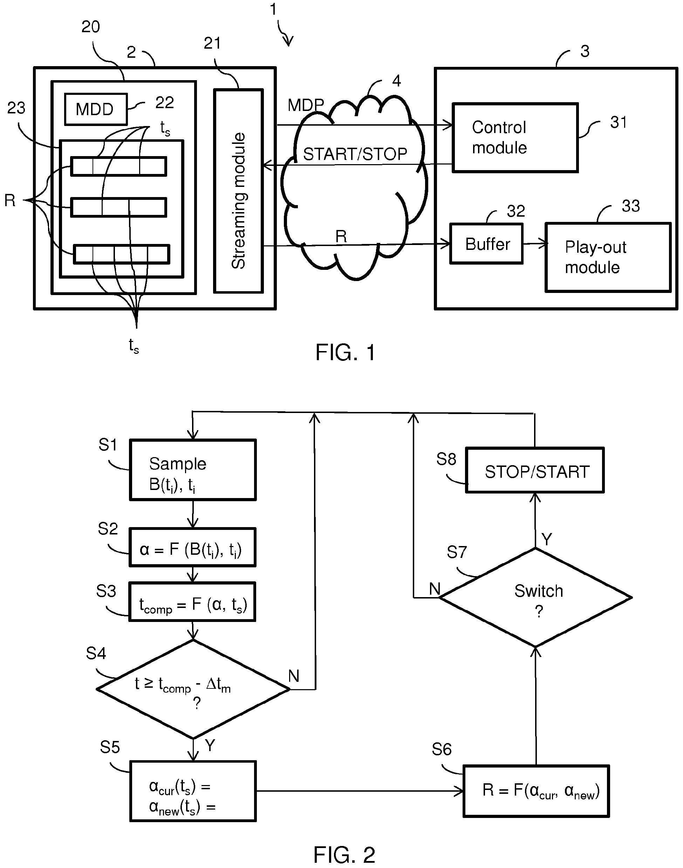

**Figure 1** is a functional view of a system 1 for transmission of media content. The system 1 comprises a server 2 and a client device 3 connected by a network 4.

The server 2 comprises a memory 20 and a streaming module 21.

The memory 20 stores media description data 22 and media content 23.

The media content 23 comprises a plurality of representations R corresponding to the media content encoded in various qualities of different bit rates. In the example of Figure 1, the media content 23 is encoded in three qualities: representation R1 for low quality, representation R2 for medium quality and representation R3 for high quality. The media content may be video, audio, audiovisual content, text... Although not shown in Figure 1, the media content may also be organized based on additional subdivisions, for example similarly to adaptation sets and periods as defined in DASH. The server 2 is capable of starting the streaming of a representation R at a plurality of switching times tₛ.

The switching times tₛ depend on the encoding method for the representations R. In the case of a video stream encoded based on intra-frames and inter-frames, a switching time tₛ may correspond to an intra-frame wherein the subsequent inter-frames (with their motion vectors) do not point to frames before this intra-frame. This makes that a new representation that is jumped to at switching time tₛ can be decoded with information that is received from the intra-frame onwards. For example, the representations R are encoded by a technique which uses Group Of Pictures (GOP) comprising intra-frames and inter-frames (such as H.262/MPEG-2, H.263, H.264/MPEG-4 AVC or HEVC), and the switching times tₛ correspond to the beginnings of the Groups Of Pictures, which is always an intra-frame, or a subset thereof. Note that in this case inter-frames just prior to an intra-frame are allowed to point to that intra-frame or even frames after that intra-frame, so that in order to decode these frames in principle the frames that they point to need to be received as well. In another example, the representations R are divided in segments (where the last GOP of a segment is closed) similarly to a DASH representation (effectively constructing segments that are independently decodable), and the switching times are the beginnings of the segments. In this case, in order to decode frames of a segment only frames of that segment are needed.

The media description data 22 specifies the number of representations R of the media content 23, the ratios between the mean bit rates of the representations R and the switching times tₛ for the respective representations R. In one example, the media description data 22 use the format of a multimedia presentation description (MPD) as defined in DASH. In that case, the representations are divided in segments and the switching times tₛ are specified by the beginnings of the segments. Also, the media description data 22 specifies the mean bit rates of the representations R, which allow determining the corresponding ratios.

The streaming module 21 controls the transmission of the media description data 22 and the media content 23 (in representations R requested by the client device 3) to the client device 3. The interactions between the server 2 and the client device 3 will be described in more detail hereafter.

The client device 3 comprises a control module 31, a buffer 32 and a play-out module 33.

When the client device 3 receives streaming media content in a current representation R, the received representation R is stored in the buffer 32 and the buffered representation R is decoded and played by the play-out module 33.

The control module 31 controls the transmission of the media content 23 (in representations R requested by the client device 3) from the server 2, in function of the amount of video data in the buffer 32. The functioning of the control module 31 and the interactions between the server 2 and the client device 3 will be described in more detail hereafter.

The network 4 allows communication between the server 2 and the client device 3, for example based on the HTTP, TCP and IP protocols.

**Figure 2** is a flowchart of a method executed by the client device 3. More specifically, we assume that the client device 3 has received the media description data 22 from the server 2 and is currently receiving a current representation R of the media content 23 from the server 2. The flowchart of Figure 2 shows the functioning of the control module 31 while the client device 3 receives streaming media content in the current representation R, stores the received representation R in the buffer 32 and the play-out module plays the buffered representation R.

At step S1, the control module 31 determines a sample (B(tᵢ), tᵢ), wherein B(tᵢ) is the amount of video data in the buffer 32 at sampling time tᵢ. The controls module 31 stores the last N samples (B(tᵢ), tᵢ), with N > 1.

Then, the control module 31 determines a completion time t_{comp} in function of the N last samples (B(tᵢ), tᵢ). The completion time t_{comp} is a prediction of the time wherein the client device 3 will have received streaming media content for the current representation up to a future switching time tₛ for at least one other representation R.

Various method may be used for predicting the evolution of the amount of video data B(t) in the buffer 32 in function of past data specified by the N last samples (B(tᵢ), tᵢ), and determining accordingly the completion time t_{comp}. For example, in the embodiment shown on Figure 1, the control module 32 determines the slope α(t) of B(t) (step S2) and determines the completion time t_{comp} in function of the slope α(t) (step S3).

Indeed, the amount of video data B(t) in the buffer 32 evolves according to B'(t)=T(t)/r(t+B(t))-1, where B'(t) denotes the time derivative of the amount of video data B(t) in the buffer 32, T(t) is the instantaneous throughput over the network 4, and r(t+B(t)) is the bit rate at which the video will be played by the play-out module 33. Based on this rule the control module 31 can predict the overall trend of how the buffer 32 will evolve in the near future as B(t+τ)=B(t)+α(t)·τ for τ>0 where α(t) is the observed slope.

One method to determine a(t) relies on minimizing the weighted root mean squared error (RMSE). Based on the N past samples (B(tᵢ), tᵢ) of the play-out buffer 32 with tᵢ<t, the estimation of a(t) that minimizes the weighted RMSE, i.e., ∑ᵢ[wᵢ·(B(t) + α(t)·(t-tᵢ)-B(tᵢ))²], is α(t)= ∑ᵢ[wᵢ·(B(t) -B(tᵢ))·(t-tᵢ)]/ ∑ᵢ[wᵢ·(t-tᵢ)²], where wᵢ are weights, which may be chosen, e.g., uniformly (wᵢ=1), decaying (wᵢ=exp(-(t-tᵢ)/Ω) with Ω some time constant) or adaptively (e.g., via observing discontinuities in B(t) and setting the weight wᵢ to 0 for which tᵢ is smaller than any discontinuity).

Once the slope α(t) is known, the control module 32 can estimate the completion time t_{comp}. Indeed, at time t the amount of video seconds in the buffer is B(t). The further evolution of B(t) may be predicted beyond what is currently known: In this example this is a linear extrapolation via the prediction of the slope α(t). Let's refer to this prediction as Bₚᵣ(t). So, if we use this prediction, if t+Bₚᵣ(t) equals a switching point tₛ all information up to the switching point is received. So, t_{comp} may be determined from the relation t_{comp} + Bₚᵣ(t_{comp}) = tₛ. Notice that the bit rate was not needed for this calculation.

Then the control module 32 determines if the completion time t_{comp} is reached (step S4). In the example of Figure 2, this is done by the test t >= t_{comp}-Δtₘ, wherein Δtₘ > 0 is a time margin. If the completion time t_{comp} is not reached, the control module 32 repeats steps S1 to S4. Accordingly, the amount of video data B(t) in the buffer 32 is continuously monitored. "Continuously monitored" means here that samples (B(tᵢ), tᵢ) are taken each time the loop of steps S1 to S4 repeats, which is for example every time the play-out module 32 decodes a frame of the current representation R. In a case of a 40 ms frame, there would be a sample (B(tᵢ), tᵢ) every 40 ms.

If the completion time t_{comp} is reached at step S4, then the control module 31 determines, for the current representation and the at least one other representation associated with the switching time tₛ, a prediction of the evolution of the amount of video data B(t) in the buffer 32 in function of the N last samples and the ratios between the mean bit rates of the representations. In the example of Figure 2, the prediction correspond to determining the alternative slopes α_{new} that would result from switching, at the switching time tₛ, from the current representation R to the other representations R associated with the switching time tₛ (step S5). This can be all the other representations R if the switching times tₛ are aligned between representations, or a subset thereof if the switching times tₛ are not aligned.

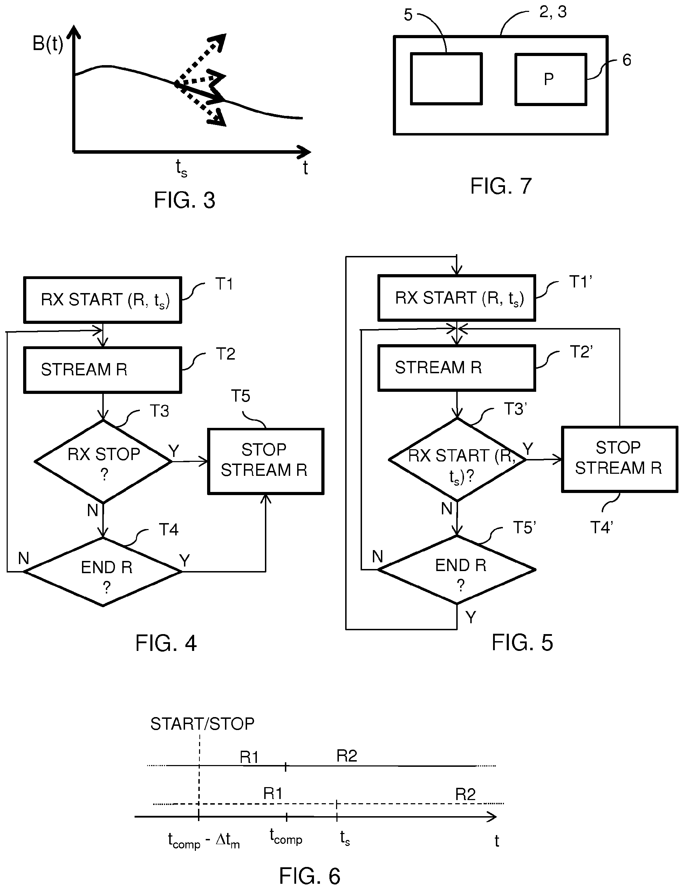

Based on the formula for B'(t) specified above, it can be deduced that changing from the current representation R of mean bit rate r_{cur} to another representation R of means bit rate r_{new} at a switching time tₛ would lead to α_{new}(tₛ) = γ·(α_{cur}(tₛ)+1)-1 where γ=(r_{cur}/r_{new}) is the ratios between mean bit rates and α_{cur}(tₛ) is the slope for the current representation determined at step S2. Notice that: 1) If γ>1, α_{new}(tₛ)>α_{cur}(tₛ) and if γ<1, α_{new}(tₛ)<α_{cur}(tₛ) and 2) if α_{cur}(tₛ)=-1 then α_{new}(tₛ)=-1. **Figure 3** is a graph showing the evolution of B(t) over time, the slope (α_{cur}(tₛ) for the current representation (continuous arrow) and possible other slopes α_{new}(tₛ) in case of switching representation (dashed arrow).

In function of the slope α_{cur}(tₛ) for the current representation and the possible other slopes α_{new}(tₛ) for the other representations R, the control module 32 chooses a representation R to be received and played from switching time tₛ. More precisely, the control module 31 chooses a representation R that would keep the amount of video data B(t) in the buffer 32 at a desired level. For example, if α_{cur}(tₛ) is negative and shows that B(t) will decrease too much with the current representation, the control module 31 chooses a representation R associated with a higher slope α_{new}(tₛ). In the opposite, α_{cur}(tₛ) is positive and shows that B(t) will increase too much with the current representation, the control module 32 chooses a representation R associated with a lower slope α_{new}(tₛ). In an intermediate situation, the control module 31 may choose to continue with the current representation R.

In case the representation selected at step S6 is the current representation, in other words when no switching is decided (step S7), the control module 31 goes back to step S1 and monitors the buffer 32 for deciding of a possible switch at the next switching time tₛ.

In the opposite, if the representation selected at step S6 is different from the current representation, in other words when switching is decided (step S7), the control module 32 sends at least one message to the server 2 (step S8) for requesting to stop transmission of the current representation and to start representation of the new representation selected at step S6.

In one embodiment, two different messages are sent at step S8: One STOP message for requesting to stop transmission of the current representation after receiving all information to decode all frames of the old representation up to switching time tₛ, and one START message for requesting to start transmission of the information to decode the new representation from switching time tₛ onwards. The START message specifies the new representation and the switching time tₛ. In case of video streams wherein GOPs are aligned and if the GOP are closed, the client device 3 does not need information of frames for the current representation beyond the intra-frame of switching time tₛ. Accordingly, the STOP message and START message may be sent at any time after step S7. In contrast, in case the GOPs are not aligned or the GOPs are not closed, the client device 3 may need some further information for the current representation after tₛ. In this case, the client device 3 should waits that all needed information for the current representation is received before sending the STOP message. The START message may be sent at any time after step S7, in particular before sending the STOP message. This may have as consequence that some frames at the boundaries may be received in the quality of the current representation and in the quality of the new representation. The play-out module 33 does not play the overlap frames twice. This is referred to as "gracefully" stopping the old representation.

In another embodiment, a unique message is sent at step S8 for requesting to stop transmission of the current representation and to start representation of the new representation. The unique message specifies the new representation and the switching time tₛ. The unique message, which may be called a START message also, implies a STOP message. In that case, in the situation discussed above wherein the client device 3 needs some further information for the current representation after tₛ, the server 2 is responsible for continuing streaming of the current representation until all needed information is sent.

Details of the STOP message, START message and unique message will be described in more details hereafter.

After step S8, the client device 3 will receive the new representation from the server 2 and the control module 31 repeats the steps S1 to S8 for the new representation R.

**Figure 4** is a flowchart of a method for transmission of media content, executed by the server 2, in the case of a client device 3 which sends a STOP message and a distinct START message at step S8 of Figure 2.

Initially, the server 2 has sent the media description data 22 related to the media 23 to the client device 3 (not shown), for example in response to a HTTP GET request from the client device 3.

Then, the server 2 receives a START message from the client device 3 (step T1). The START message specifies a representation R and a switching time tₛ, and is a request for transmission of the representation R starting from switching time tₛ.

In response to the reception of the START message, the streaming module 21 starts streaming media data of the requested representation R, from the switching time tₛ (Step T2). The streaming module 21 continues streaming the representation R until the server 2 receives a STOP message from the client device 3 or until the end of the representation R. This is shown on Figure 4 by the loop of steps T2, T3 and T4.

In case the server 2 receives a STOP message from the client device 3 (step T3) or the end of the representation R is reached (step T4), the streaming module 21 stops transmission of the representation R (Step T5).

In the situation discussed above wherein the client device 3 decides to switch from the current representation to a new representation but still needs some information about the current representation after switching time tₛ, the server 2 may receive a START message for the new representation before receiving the STOP message for the current representation. In that time interval, the steps of Figure 4 are executed in parallel for both representations.

In one embodiment based on Figure 4, the representations R are divided in segments and the media description data 22 use the format of a manifest file (MDP) as specified in DASH or a similar format. Accordingly, the switching points tₛ are segment boundaries and the ratios yof the bit rates of the representations can be determined in function of the average bit rates specified in the manifest files. However, messages between the client device 3 and the server 2 are different from the DASH messages. Existing DASH clients request on a segment by segment basis. In contrast, in this embodiment, the START message (step S8 of Figure 2 and step T1 of Figure 4) is a HTTP GET request from the client device 3 to the server 2, which requests a representation R from a switching time tₛ up to the end of this representation. Such a long HTTP request can be stopped by aborting the TCP connection it runs over (via sending an RST (reset) packet).

So, if the client device 3 decides to switch from the current representation to a new representation at a switching point tₛ (step S7 of Figure 2), the client device 3 waits that all information to decode the current representation up to time tₛ has been received. In case of aligned closed GOP this is up to frame tₛ of the current representation, but in the other case this may involve some more frames (i.e., frames that the motion vectors point to). In the latter case the media description data 22 may describe how many frames beyond tₛ (from the representation jumped from) are still needed. Then, the client device 3 sends a RST packet to the server 2 in order to abort the TCP connection over which the current representation R is being received. The RST packet is the STOP message (Step S8 of Figure 2 and step T3 of Figure 4).

In parallel, the client device 3 opens a new TCP connection, and sends a new START message, requesting the new representation from time tₛ until the end of that representation. The START message for requesting the new representation R may be sent before or after the STOP message for stopping the current representation. In the later case, the new TCP connection possibly inherits the cwnd of the just closed TCP as initial window.

**Figure 5** is a flowchart of a method for transmission of media content, executed by the server 2, in the case of a client device 3 which sends a unique message at step S8 of Figure 2. Hereafter, the unique message is called START message.

Initially, the server 2 has sent the media description data 22 related to the media 23 to the client device 3 (not shown), for example in response to a HTTP GET request from the client device 3.

Then, the server 2 receives a START message from the client device 3 (step T1'). The START message specifies a representation R and a switching time tₛ, and is a request for transmission of the representation R starting from switching time tₛ.

In response to the reception of the START message, the streaming module 21 starts streaming media data of the requested representation R, from the switching time tₛ (Step T2'). The streaming module 21 continues streaming the representation R until the server 2 receives another START message from the client device 3 or until the end of the representation R. This is shown on Figure 5 by the loop of steps T2', T3' and T5'.

In case the server 2 receives another START message from the client device 3 (step T3'), the streaming module 21 stops transmission of the current representation R after all needed information for decoding the current representation up to tₛ has been sent (step T4') and starts streaming media data of the new representation R, from the new switching time tₛ (Step T2').

In one embodiment based on Figure 5, prior to the start of transfer of the media 23, a web socket is set up (see RFC 6455). This allows bi-directional communication between the client device 3 and the server 2 over an "upgraded" HTTP connection. The client device 3 combines the start and stop messages in one unique message, which it sends over the web socket to the server 2. Thus, when the client device 3 sends a START message to receive a new representation R from tₛ onwards, this implies a STOP message for the current representation up to time tₛ. The START message indicates to the server 2 which representation from which starting point tₛ the server 2 should send over the web socket and which it should stop sending. The server is responsible for framing (according to the rules specified in RFC 6455) and sending the information associated with the right representation over the web socket to the client device 3. This unique message (START message) may be for example an HTTP GET request, or another message having a format accepted by the server 2.

In the system 1, after receiving the media description data 22 from the server 2, the client device 3 requests transmission of the media content in a selected representation R. The server 2 starts transmission of the requested representation R and continues streaming until the end of the representation or unit it receives other instructions from the client device 3. The client device 3 monitors the amount of data in the buffer 32 and may decide to switch of representation at a future switching time tₛ, thereby adapting the mean bit rate to the network 4.

In the embodiments described above, the communication between the client device 3 and the server 2 is based on HTTP or HTTP over a web socket. This is advantageous in terms of compatibility with firewall, proxies, caching mechanisms...

Moreover, in comparison to DASH and other adaptive streaming over HTTP techniques, gaps in the transmission of media data are significantly reduced or even avoided. Indeed, as long as the client device 3 does not change representation, no gap occurs in the transmission of the media 23. In contrast, in DASH there is a gap after each segment, even for two successive segments of the same representation. Moreover, even when the client device 3 decides to change representation, gaps are reduced or avoided, as illustrated on Figure 6.

**Figure 6** is a time line showing the representation received by the client device 3 (in continuous line) and the representation decoded and played by the play-out module 33 (in dashed line).

Initially, the client device 3 receives and plays representation R1, continuously monitors the buffer 32 and determines the completion time t_{comp} for the next switching time tₛ (steps S1 to S4 of Figure 2). At time t_{comp} - Δtₘ, the client device 3 sends a STOP message and a START message, or a unique START message, to the server 2 for requesting representation R2 from switching time tₛ (step S5-S8 of Figure 2). Depending on the time margin Δtₘ and the communication delay between the client device 3 and the server 2, the server 2 may receive the STOP message and a START message or the unique START message before having sent representation R1 up to switching time tₛ, or after. In the first case, the server 2 first continues to sends representation R1 up to switching time tₛ, then starts sending representation R2 from switching time tₛ. There may be no gap between transmission of the two representations. In the second case, the server 2 stops sending representation R1 and starts sending representation R2 from switching time tₛ. There is an overlap in the representations received by the client device 3, and the play-out module 33 does not play the overlap part twice. Here also, there may be no gap between transmission of the two representations.

**Figure 7** is a structural view of a communication device, which may be the server 2 or the client device 3. The communication device comprises a processor 5 and a memory 6. The memory 6 stores a computer program P which, when executed by the processor 5, cause the server 2, respectively the client device 3, to execute the method described above with reference to Figures 4 or 5, respectively Figure 2.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for transmission of media content (23) from a server (2) to a client device (3), executed by the client device (3), wherein the server (2) is capable of streaming the media content (23) in a plurality of representations (R) having different mean bit rates and of starting the streaming of a representation (R) at a plurality of switching times (tₛ) for said representation, the method comprising:
- obtaining media description data (22) representative of the number of available representations (R), the ratios between the mean bit rates of the representations (R) and switching times (tₛ) for the representations (R),
- while receiving streaming media content in a current representation (R), storing the received representation (R) in a buffer (32) and playing the buffered representation (R):
- determining (S1) a sample comprising a sampling time (tᵢ) and the amount of data (B(tᵢ)) in the buffer (32) at the sampling time, and storing the N last samples,
- determining (S2, S3), in function of said N last samples, a completion time (t_{comp}) wherein the client device (3) will have received streaming media content (23) for the current representation (R) up to a future switching time (tₛ),
- in response to reaching (S4) said completion time (t_{comp}):
- for current representation (R) and at least one other representation associated with said future switching time (tₛ), determining (S5) a prediction of the evolution of the amount of data (B(t)) in the buffer (32) in function of the N last samples and said ratios,
- selecting (S6) a representation (R) in function of said predictions, and
- if the selected representation is different from the current representation, sending (S8) at least one message to the server for stopping transmission of the current representation and starting transmission of the selected representation from said switching time.

2. Method according to claim 1, wherein determining said completion time comprises:
- determining (S2) a slope of the amount of data in the buffer over time, in function of said N last samples, and
- determining (S3) said completion time in function of said slope.

3. Method according to claim 2, wherein determining (S5) a prediction of the evolution of the amount of data in the buffer for said other representation comprises determining a new slope for the other representation in function of the slope for the current representation and the ratio between the mean bit rates for the current representation and the other representation.

4. Method according to one of claims 1 to 3, wherein samples are determined for respective decoded frame of the media content.

5. Method according to one of claims 1 to 4, comprising:
- sending an HTTP GET request to the server (2), specifying the current representation and a first switching time for the current representation, and
- wherein sending (S8) at least one message to the server for stopping transmission of the current representation and starting transmission of the selected representation from said switching time comprises:
- sending an RST packet to the server for stopping transmission of the current representation, and
- sending an HTTP GET request to the server specifying the selected representation and the switching time for the selected representation.

6. Method according to one of claims 1 to 4, comprising:
- setting up a web socket for communication between the client device (3) and the server (2), and
- wherein sending (S8) at least one message to the server for stopping transmission of the current representation and starting transmission of the selected representation from said switching time comprises sending a unique request over the web socket, specifying the selected representation and the switching time for said selected representation.

7. Computer program (P) comprising instructions for performing the method according to one of claims 1 to 6 when said instructions are executed by a computer.

8. Client device (3) for transmission of media content from a server (2) to said client device (3), wherein the server (2) is capable of streaming the media content (23) in a plurality of representations (R) having different mean bit rates and of starting the streaming of a representation at a plurality of switching times (tₛ) for said representation, the client device (3) comprising a control module (31) configured for:
- obtaining media description data (22) representative of the number of available representations, the ratios between the mean bit rates of the representations and switching times for the representations,
- while receiving streaming media content in a current representation, storing the received representation in a buffer (32) and playing the buffered representation:
- determining (S1) a sample comprising a sampling time and the amount of data in the buffer at the sampling time, and storing the N last samples,
- determining (S2, S3), in function of said N last samples, a completion time wherein the client device will have received streaming media content for the current representation up to a future switching time,
- in response to reaching (S4) said completion time:
- for the current representation (R) and at least one other representation associated with said future switching time (tₛ), determining (S5) a prediction of the evolution of the amount of data in the buffer in function of the N last samples and said ratios,
- selecting (S6) a representation in function of said predictions, and
- if the selected representation is different from the current representation, sending (S8) at least one message to the server for stopping transmission of the current representation and starting transmission of the selected representation from said switching time.

9. System (1) comprising a client device (3) according to claim 8 and a server (2) for transmission of media content to the client device (3),
wherein the server (2) is capable of streaming the media content in a plurality of representations having different mean bit rates and of starting the streaming a representation at a plurality of switching times for said representation.

10. System according to claim 9, wherein the server comprises a streaming module configured (21) for:
- setting up a web socket for communication between the client device and the server,
- in response to a request received over the web socket, specifying a selected representation and a switching time for the selected representation:
- stopping transmission of a current representation, and
- starting transmission of the selected representation from said switching time.

## Patentansprüche

1. Verfahren zur Übertragung von Medieninhalt (23) von einem Server (2) an ein Client-Gerät (3), ausgeführt von dem Client-Gerät (3), wobei der Server (2) fähig ist, den Medieninhalt (23) in einer Vielzahl von Darstellungen (R) mit unterschiedlichen Durchschnittsbitraten zu streamen und das Streaming einer Darstellung (R) zu einer Vielzahl von Schaltzeiten (tₛ) für die besagte Darstellung zu starten, wobei das Verfahren Folgendes umfasst:
- Erhalten von Medienbeschreibungsdaten (22), die bezeichnend sind für die Anzahl von verfügbaren Darstellungen (R), die Verhältnisse zwischen den Durchschnittsbitraten der Darstellungen (R) und Schaltzeiten (tₛ) für die Darstellungen (R),
- während des Empfangs von Streaming-Medieninhalt in einer aktuellen Darstellung (R), Speichern der empfangenen Darstellung (R) in einem Puffer (32) und Abspielen der gepufferten Darstellung (R):
- Bestimmen (S1) einer Probe, umfassend eine Probenzeit (tᵢ) und die Menge von Daten (B(tᵢ)) im Puffer (32) zur Probenzeit, und Speichern der N letzten Proben,
- Bestimmen (S2, S3), in Abhängigkeit von den besagten N letzten Proben, einer Abschlusszeit (t_{comp}), in der das Client-Gerät (3) den Streaming-Medieninhalt (23) für die aktuelle Darstellung (R) bis zu einer zukünftigen Schaltzeit (tₛ) empfangen haben wird,
- als Antwort auf das Erreichen (S4) der besagten Abschlusszeit (t_{comp}):
- für die aktuelle Darstellung (R) und mindestens eine andere Darstellung in Verbindung mit der besagten zukünftigen Schaltzeit (tₛ), Bestimmen (S5) einer Voraussage des Verlaufs der Menge von Daten (B(t)) im Puffer (32) in Abhängigkeit von den N letzten Proben und besagten Verhältnissen,
- Auswählen (S6) einer Darstellung (R) in Abhängigkeit von den besagten Voraussagen, und
- wenn sich die ausgewählte Darstellung von der aktuellen Darstellung unterscheidet, Senden (S8) von mindestens einer Nachricht an den Server zum Stoppen der Übertragung der aktuellen Darstellung und Starten der Übertragung der ausgewählten Darstellung von der besagten Schaltzeit.

2. Verfahren nach Anspruch 1, wobei das Bestimmen der besagten Abschlusszeit Folgendes umfasst:
- Bestimmen (S2) eines Anstiegs der Menge von Daten im Puffer im Zeitablauf, in Abhängigkeit von den besagten N letzten Proben, und
- Bestimmen (S3) der besagten Abschlusszeit in Abhängigkeit von dem besagten Anstieg.

3. Verfahren nach Anspruch 2, wobei das Bestimmen (S5) einer Voraussage des Verlaufs der Menge von Daten im Puffer für die besagte andere Darstellung das Bestimmen eines neuen Anstiegs für die andere Darstellung in Abhängigkeit von dem Anstieg für die aktuelle Darstellung und dem Verhältnis zwischen den Durchschnittsbitraten für die aktuelle Darstellung und die andere Darstellung umfasst.

4. Verfahren nach einem der Ansprüche 1 bis 3, wobei Proben für einen jeweiligen decodierten Rahmen des Medieninhalts bestimmt werden.

5. Verfahren nach einem der Ansprüche 1 bis 4, umfassend:
- Senden einer HTTP GET-Anfrage an den Server (2), welche die aktuelle Darstellung und eine erste Schaltzeit für die aktuelle Darstellung spezifiziert, und
- wobei das Senden (S8) von mindestens einer Nachricht an den Server zum Stoppen der Übertragung der aktuellen Darstellung und Starten der Übertragung der ausgewählten Darstellung von der besagten Schaltzeit Folgendes umfasst:
- Senden eines RST-Pakets an den Server zum Stoppen der Übertragung der aktuellen Darstellung, und
- Senden einer HTTP GET-Anfrage an den Server, welche die ausgewählte Darstellung und die Schaltzeit für die ausgewählte Darstellung spezifiziert.

6. Verfahren nach einem der Ansprüche 1 bis 4, umfassend:
- Einrichten eines Web-Sockets für die Kommunikation zwischen dem Client-Gerät (3) und dem Server (2), und
- wobei das Senden (S8) von mindestens einer Nachricht an den Server zum Stoppen der Übertragung der aktuellen Darstellung und Starten der Übertragung der ausgewählten Darstellung von der besagten Schaltzeit das Senden einer eindeutigen Anfrage über den Web-Socket umfasst, welche die ausgewählte Darstellung und die Schaltzeit für die besagte ausgewählte Darstellung spezifiziert.

7. Computerprogramm (P), umfassend Anweisungen zum Durchführen des Verfahrens nach einem der Ansprüche 1 bis 6, wenn die besagten Anweisungen von einem Computer ausgeführt werden.

8. Client-Gerät (3) zur Übertragung von Medieninhalt von einem Server (2) an das besagte Client-Gerät (3), wobei der Server (2) fähig ist, den Medieninhalt (23) in einer Vielzahl von Darstellungen (R) mit unterschiedlichen Durchschnittsbitraten zu streamen und das Streaming einer Darstellung zu einer Vielzahl von Schaltzeiten (tₛ) für die besagte Darstellung zu starten, wobei das Client-Gerät (3) ein Steuerungsmodul (31) umfasst, das ausgelegt ist zum:
- Erhalten von Medienbeschreibungsdaten (22), die bezeichnend sind für die Anzahl von verfügbaren Darstellungen, die Verhältnisse zwischen den Durchschnittsbitraten der Darstellungen und Schaltzeiten für die Darstellungen,
- während des Empfangs von Streaming-Medieninhalt in einer aktuellen Darstellung, Speichern der empfangenen Darstellung in einem Puffer (32) und Abspielen der gepufferten Darstellung:
- Bestimmen (S1) einer Probe, umfassend eine Probenzeit und die Menge von Daten im Puffer zur Probenzeit, und Speichern der N letzten Proben,
- Bestimmen (S2, S3), in Abhängigkeit von den besagten N letzten Proben, einer Abschlusszeit, in der das Client-Gerät den Streaming-Medieninhalt für die aktuelle Darstellung bis zu einer zukünftigen Schaltzeit empfangen haben wird,
- als Antwort auf das Erreichen (S4) der besagten Abschlusszeit:
- für die aktuelle Darstellung (R) und mindestens eine andere Darstellung in Verbindung mit der besagten zukünftigen Schaltzeit (tₛ), Bestimmen (S5) einer Voraussage des Verlaufs der Menge von Daten im Puffer in Abhängigkeit von den N letzten Proben und besagten Verhältnissen,
- Auswählen (S6) einer Darstellung in Abhängigkeit von den besagten Voraussagen, und
- wenn sich die ausgewählte Darstellung von der aktuellen Darstellung unterscheidet, Senden (S8) von mindestens einer Nachricht an den Server zum Stoppen der Übertragung der aktuellen Darstellung und Starten der Übertragung der ausgewählten Darstellung von der besagten Schaltzeit.

9. System (1), umfassend ein Client-Gerät (3) nach Anspruch 8 und einen Server (2) zur Übertragung von Medieninhalt an das Client-Gerät (3),
wobei der Server (2) fähig ist, den Medieninhalt in einer Vielzahl von Darstellungen mit unterschiedlichen Durchschnittsbitraten zu streamen und das Streaming einer Darstellung zu einer Vielzahl von Schaltzeiten für die besagte Darstellung zu starten.

10. System nach Anspruch 9, wobei der Server ein Streaming-Modul umfasst, das ausgelegt (21) ist zum:
- Einrichten eines Web-Sockets für die Kommunikation zwischen dem Client-Gerät und dem Server,
- als Antwort auf eine über den Web-Socket empfangene Anfrage, die eine ausgewählte Darstellung und eine Schaltzeit für die ausgewählte Darstellung spezifiziert:
- Stoppen der Übertragung einer aktuellen Darstellung, und
- Starten der Übertragung der ausgewählten Darstellung von der besagten Schaltzeit.

## Revendications

1. Procédé pour la transmission de contenu média (23) d'un serveur (2) à un dispositif client (3), exécuté par le dispositif client (3), dans lequel le serveur (2) est capable de lire en continu le contenu média (23) dans une pluralité de représentations (R) ayant des débits binaires moyens différents et de commencer la lecture en continu d'une représentation (R) à une pluralité de temps de commutation (tₛ) pour ladite représentation, le procédé comprenant les étapes suivantes :
- obtenir des données de description de média (22) représentatives du nombre de représentations disponibles (R), des rapports entre les débits binaires moyens des représentations (R) et les temps de commutation (tₛ) pour les représentations (R),
- pendant la réception du contenu média de lecture en continu dans une représentation actuelle (R), stocker la représentation reçue (R) dans un tampon (32) et lire la représentation tamponnée (R) :
- déterminer (S1) un échantillon comprenant un temps d'échantillonnage (tᵢ) et la quantité de données (B(tᵢ)) dans le tampon (32) au temps d'échantillonnage, et stocker les N derniers échantillons,
- déterminer (S2, S3), en fonction desdits N derniers échantillons, un temps d'achèvement (t_{comp}) où le dispositif client (3) aura reçu le contenu média de lecture en continu (23) pour la représentation actuelle (R) jusqu'à un temps de commutation futur (tₛ),
- en réponse au fait d'atteindre (S4) ledit temps d'achèvement (t_{comp}) :
- pour la représentation actuelle (R) et au moins une autre représentation associée audit temps de commutation futur (tₛ), déterminer (S5) une prédiction de l'évolution de la quantité de données (B(t)) dans le tampon (32) en fonction des N derniers échantillons et desdits rapports,
- sélectionner (S6) une représentation (R) en fonction desdites prédictions, et
- si la représentation sélectionnée est différente de la représentation actuelle, envoyer (S8) au moins un message au serveur pour arrêter la transmission de la représentation actuelle et commencer la transmission de la représentation sélectionnée à partir dudit temps de commutation.

2. Procédé selon la revendication 1, dans lequel la détermination dudit temps d'achèvement comprend les étapes suivantes :
- déterminer (S2) une pente de la quantité de données dans le tampon dans le temps, en fonction desdits N derniers échantillons, et
- déterminer (S3) ledit temps d'achèvement en fonction de ladite pente.

3. Procédé selon la revendication 2, dans lequel la détermination (S5) d'une prédiction de l'évolution de la quantité de données dans le tampon pour ladite autre représentation comprend la détermination d'une nouvelle pente pour l'autre représentation en fonction de la pente pour la représentation actuelle et du rapport entre les débits binaires moyens pour la représentation actuelle et l'autre représentation.

4. Procédé selon l'une des revendications 1 à 3, dans lequel des échantillons sont déterminés pour une trame décodée respective du contenu média.

5. Procédé selon l'une des revendications 1 à 4, comprenant les étapes suivantes :
- envoyer une requête HTTP GET au serveur (2), spécifiant la représentation actuelle et un premier temps de commutation pour la représentation actuelle, et
- dans lequel l'envoi (S8) d'au moins un message au serveur pour arrêter la transmission de la représentation actuelle et commencer la transmission de la représentation sélectionnée à partir dudit temps de commutation comprend les étapes suivantes :
- envoyer un paquet RST au serveur pour arrêter la transmission de la représentation actuelle, et
- envoyer une requête HTTP GET au serveur spécifiant la représentation sélectionnée et le temps de commutation pour la représentation sélectionnée.

6. Procédé selon l'une des revendications 1 à 4, comprenant les étapes suivantes :
- établir une socket web pour la communication entre le dispositif client (3) et le serveur (2), et
- dans lequel l'envoi (S8) d'au moins un message au serveur pour arrêter la transmission de la représentation actuelle et commencer la transmission de la représentation sélectionnée à partir dudit temps de commutation comprend l'envoi d'une requête unique sur la socket web, spécifiant la représentation sélectionnée et le temps de commutation pour ladite représentation sélectionnée.

7. Programme informatique (P) comprenant des instructions pour effectuer le procédé selon l'une des revendications 1 à 6 lorsque lesdites instructions sont exécutées par un ordinateur.

8. Dispositif client (3) pour la transmission de contenu média d'un serveur (2) audit dispositif client (3), dans lequel le serveur (2) est capable de lire en continu le contenu média (23) dans une pluralité de représentations (R) ayant des débits binaires moyens différents et de commencer la lecture en continu d'une représentation à une pluralité de temps de commutation (tₛ) pour ladite représentation, le dispositif client (3) comprenant un module de commande (31) configuré pour :
- obtenir des données de description de média (22) représentatives du nombre de représentations disponibles, des rapports entre les débits binaires moyens des représentations et les temps de commutation pour les représentations,
- pendant la réception du contenu média de lecture en continu dans une représentation actuelle, stocker la représentation reçue dans un tampon (32) et lire la représentation tamponnée :
- déterminer (S1) un échantillon comprenant un temps d'échantillonnage et la quantité de données dans le tampon au temps d'échantillonnage, et stocker les N derniers échantillons,
- déterminer (S2, S3), en fonction desdits N derniers échantillons, un temps d'achèvement où le dispositif client aura reçu le contenu média de lecture en continu pour la représentation actuelle jusqu'à un temps de commutation futur,
- en réponse au fait d'atteindre (S4) ledit temps d'achèvement :
- pour la représentation actuelle (R) et au moins une autre représentation associée audit temps de commutation futur (tₛ), déterminer (S5) une prédiction de l'évolution de la quantité de données dans le tampon en fonction des N derniers échantillons et desdits rapports,
- sélectionner (S6) une représentation en fonction desdites prédictions, et
- si la représentation sélectionnée est différente de la représentation actuelle, envoyer (S8) au moins un message au serveur pour arrêter la transmission de la représentation actuelle et commencer la transmission de la représentation sélectionnée à partir dudit temps de commutation.

9. Système (1) comprenant un dispositif client (3) selon la revendication 8 et un serveur (2) pour la transmission de contenu média au dispositif client (3),
dans lequel le serveur (2) est capable de lire en continu le contenu média dans une pluralité de représentations ayant des débits binaires moyens différents et de commencer la lecture en continu d'une représentation à une pluralité de temps de commutation pour ladite représentation.

10. Système selon la revendication 9, dans lequel le serveur comprend un module de lecture en continu configuré (21) pour :
- établir une socket web pour la communication entre le dispositif client et le serveur,
- en réponse à une requête reçue sur la socket web, spécifier une représentation sélectionnée et un temps de commutation pour ladite représentation sélectionnée :
- arrêter la transmission d'une représentation actuelle, et
- commencer la transmission de la représentation sélectionnée à partir dudit temps de commutation.
